# FASCICULE DE BREVET EUROPEEN

(11) **EP 3 343 839 B1**
(45) Date de publication et mention de la délivrance du brevet: **31.07.2024**
(21) Numéro de dépôt: 17211002.5
(22) Date de dépôt: 28.12.2017
(51) Int. Cl.: G06F 11/34, H04L 41/5025, H04L 43/0817, H04L 43/16, H04L 43/0876

(54) **MÉCANISME DE SURVEILLANCE ET D'ALERTES DES APPLICATIONS DU SYSTÈME INFORMATIQUE**
MECHANISMUS ZUR ÜBERWACHUNG UND ALARMIERUNG VON COMPUTERSYSTEMANWENDUNGEN
MECHANISM FOR MONITORING AND ALERTS OF COMPUTER SYSTEM APPLICATIONS

(30) Priorité: 29.12.2016 FR 1663499
(43) Date de publication de la demande: 04.07.2018
(73) Titulaire: BULL SAS, 78340 Les Clayes Sous Bois (FR)
(72) Inventeur: DEMEILLIEZ, Bruno, 38410 Saint Martin d'Uriage (FR); GERMAIN, Christophe, 38100 GRENOBLE (FR); ROCHETTE, Florent, 38170 SEYSSINET PARISET (FR)
(74) Mandataire: Cabinet Camus Lebkiri

(56) Documents cités:
- EP-A1- 2 993 827
- EP-A1- 2 996 036
- EP-A1- 3 029 573
- EP-A1- 3 163 445
- VINCENT C EMEAKAROHA ET AL: "Low level Metrics to High level SLAs - LoM2HiS framework: Bridging the gap between monitored metrics and SLA parameters in cloud environments", HIGH PERFORMANCE COMPUTING AND SIMULATION (HPCS), 2010 INTERNATIONAL CONFERENCE ON, IEEE, PISCATAWAY, NJ, USA, 28 June 2010 (2010-06-28), pages 48 - 54, XP031731503, ISBN: 978-1-4244-6827-0
- GUIJUN WANG ET AL: "Service Level Management using QoS Monitoring, Diagnostics, and Adaptation for Networked Enterprise Systems", EDOC ENTERPRISE COMPUTING CONFERENCE, 2005 NINTH IEEE INTERNATIONAL ENSCHEDE, THE NETHERLANDS 19-23 SEPT. 2005, PISCATAWAY, NJ, USA,IEEE, 19 September 2005 (2005-09-19), pages 239 - 250, XP010853657, ISBN: 978-0-7695-2441-2

## Description

### DOMAINE TECHNIQUE DE L'INVENTION

La présente invention concerne le domaine de la surveillance d'infrastructures informatiques, et plus particulièrement le domaine de la surveillance et d'alertes des applications du système informatique des entreprises.

### ARRIERE-PLAN TECHNOLOGIQUE DE L'INVENTION

Dans le cadre des activités de la Direction des Systèmes d'information (DSI), une intervention est requise lorsque le respect de la qualité de service d'une application est au dessus des seuils critiques ou lorsque l'application ne fonctionne pas. Généralement, cette situation s'explique par le fait qu'aucune surveillance n'est en place sur l'infrastructure hébergeant la solution et/ou que la remontée des alertes n'est pas faite ou est faite trop tardivement. Dans ce cas, il est généralement très difficile de trouver l'origine du problème afin de la corriger, car les données nécessaires à l'analyse du problème ne sont pas ou plus disponibles.

Il est connu de l'art antérieur des solutions permettant de surveiller des infrastructures informatiques. Ces solutions permettent de diagnostiquer des problèmes de contentions sur les serveurs, mais ne permettent pas de faire le lien entre une saturation de ressources et les applications du système d'information. Ces solutions permettent uniquement de déclencher une intervention technique pour résoudre le problème, mais elles ne permettent pas de répondre aux niveaux des « accords de niveau de service » (défini également par le terme anglophone Service-Level Agreement SLA) que doivent garantir les DSI (Directeurs des Systèmes Informatiques) à leurs directions métiers pour assurer une bonne performance et un bon respect de la qualité de service des applications ou des serveurs d'une chaîne applicative.

Par ailleurs, on connaît également les demandes de brevet EP2996036A1, EP3029573A1, EP2993827A1 et EP3163445A1 qui proposent des solutions de surveillance.

Dans ce contexte, il est intéressant de proposer une solution permettant de pallier les inconvénients de l'art antérieur en remédiant aux problèmes de performance applicative d'un système informatique.

### DESCRIPTION GENERALE DE L'INVENTION

La présente invention a pour but de pallier certains inconvénients de l'art antérieur en proposant une solution permettant de remédier et/ou prévenir les problèmes de performances applicative.

L'invention est définie par un système selon la revendication 1 et un procédé selon la revendication 13. Des modes de réalisation avantageux sont définis dans les revendications dépendantes.

### DESCRIPTION DES FIGURES ILLUSTRATIVES

D'autres particularités et avantages de la présente invention apparaîtront plus clairement à la lecture de la description ci-après, faite en référence aux dessins annexés, dans lesquels :
- la figure 1 représente schématiquement des éléments d'un système pour mettre en oeuvre un mécanisme de surveillance des performances des applications d'une chaîne applicative, selon un mode de réalisation de l'invention ;
- la figure 2 représente schématiquement un procédé de surveillance et d'alerte des performances des applications d'une chaîne applicative, selon un mode de réalisation de l'invention.

### DESCRIPTION DES MODES DE RÉALISATION PRÉFÉRÉS DE L'INVENTION

Dans la suite, une sonde informatique est un logiciel associé à un équipement (par exemple un capteur) qui permet automatiquement, par exemple dès qu'il y a une certaine variation ou de façon cyclique, d'effectuer, de gérer et faire remonter vers un équipement de surveillance des mesures destinées à informer entre autres de la qualité des flux réseau ou de la qualité de service (QoS, pour « quality of service » en anglais). Ainsi, elles ne nécessitent donc pas l'envoi de commandes répétitives de la part de l'utilisateur qui viennent encombrer le réseau mais les remontées d'informations sont faites automatiquement par les sondes.

Dans un mode de réalisation, la fréquence d'échantillonnage des sondes doit rester constante et synchrone afin de pouvoir corréler les mesures entre les différents serveurs physiques et/ou virtuels qui composent la chaine applicative.

La présente invention concerne un système comprenant au moins une machine informatique et un logiciel ou code exécutable par la machine, qui communique avec les autres matériels ou logiciels d'une chaîne applicative pour mettre en oeuvre un mécanisme de surveillance des performances des applications (ou des serveurs) d'une chaîne applicative, notamment lors de la dégradation des performances des applications de la chaîne applicative. On notera que la dégradation de performance d'application de la chaîne applicative, peut-être tout type de comportement anormal ou tout type de contention potentielle sur l'une ou plusieurs des applications (ou serveurs) de la chaîne applicative, par exemple et non limitativement une saturation des ressources d'une application ou une surconsommation des ressources d'une application. La chaîne applicative comprend un ensemble de ressources (*R₁,* ..., *Rᵢ,* ..., *Rₙ*) utilisée en tout ou partie par une pluralité d'applications ou de serveurs (*A₁,* ..., *Aⱼ,* ..., *Aₘ*), la structuration de la chaîne applicative est donc représentée en mémoire par une liste d'identifiants *Lrᵢ* de ressources associés à chaque application *Aⱼ.*

Le système comporte au moins un agencement matériel et logiciel informatique de mémorisation d'un référentiel de mesure (1). Le référentiel de mesure (1) comprend au moins un agencement matériel et logiciel informatique (10), permettant la mesure, par des sondes de consommation, d'un niveau d'utilisation *Nurᵢ* des ressources *Rᵢ* sur chacune des applications *Aⱼ* de l'ensemble des applications (*A₁*, ..., *Aⱼ*, ..., *Aₘ*) qui constituent la chaîne applicative lors des périodes de dégradation des performances *Pdpⱼ*, puis la mémorisation de ces niveaux *Nurᵢ* dans une mémoire (11) du référentiel de mesure (1), en association avec la période *Pdpⱼ*, pour constituer des doublets d'information (*Nur*_{*i*,} *Pdpⱼ*).

Les sondes de consommation sont associées à chaque ressource pour remonter les informations de mesures ou métriques, représentant le niveau d'utilisation des ressources (*Nur*)*.* Pour chaque ressource, les sondes de consommation définissent un identifiant *Lr* pour le nom de la ressource et un niveau d'utilisation *Nu.* Le niveau d'utilisation de chaque ressource *Nur*ᵢ correspond à un doublet d'information (*Lr, Nuᵢ*). Le même processus s'effectue pour les périodes sans problème de performance pour mémoriser des triplets *(Lr, Nuᵢ, Pndpⱼ*)*.*

La mémoire (11) du référentiel de mesure stocke ainsi des triplets (*Lr*, *Nuᵢ*, *Pdpⱼ*) ou *(Lr, Nuⱼ*, *Pdpⱼ*), ce qui présente l'avantage de réduire le nombre et la quantité d'informations envoyées par les sondes, pour réduire l'encombrement du réseau tout en améliorant la précision par rapport aux solutions connues ci-dessus.

Dans certains modes de réalisation, les ressources sondées peuvent être chaque instance de cluster, chaque cache applicatif, chaque taille des files de messages d'interface de programmation d'applications JMS/JDBC en plus du processeur, des entrées/sorties, et de la mémoire. L'interface de programmation d'applications (API) JMS (service de messagerie java) est une interface de programmation pour l'envoi et la réception de message entre applications et, JDBC (« connectivité des bases de données java ») est une API permettant l'accès à des bases de données.

Des informations peuvent être remontées par les sondes de consommations, telles que par exemple et non limitativement, la charge sur chacun des serveurs calculée en pourcentage (%) d'occupation des ressources (un processeur (définit également comme un « central processing unit CPU » en anglais), une mémoire, etc.), la charge sur les entrées/sorties des disques ou la charge sur le débit du réseau (paquets de connexion (définit également comme un « transmission control protocol TCP » en anglais) et comptage des octets), etc.

Des éléments génériques tels que: charges, pourcentages (%) d'occupations des ressources, temps de réponse, temps de traitement, niveau d'utilisation CPU, niveau de lecture disque, niveau d'écriture disque, etc., peuvent être mesurés par les sondes mais aussi des éléments ou évènements plus spécifiques tels que le nombre de fichiers ou de ports ouverts, de files de message JDBC (pour « Java DataBase Connectivity » en anglais, étant une interface de programmation permettant à un programme Java l'accès aux bases de données) ou JMS (pour « Java Message Service » en anglais, étant une interface de programmation permettant d'envoyer et recevoir des messages entre les applications), le taux d'occupation du système de fichiers, le taux de fonctionnement du ramasse miettes ou récupérateur de mémoires (pour « garbage collecter » en anglais) pour les applications J2EE (pour « Java Enterprise Edition » en anglais, J2EE étant une plateforme orientée serveur pour le développement et l'exécution d'applications distribuées), etc.

Par système de fichiers, d'une architecture matérielle informatique par exemple, on entend un ensemble de principes et de règles selon lesquels les fichiers de ladite architecture informatique sont organisés et manipulés.

Le système comprend également un agencement matériel et logiciel informatique (20) comprenant un référentiel de configuration (2). En effet, l'agencement matériel et logiciel du système permet d'établir le référentiel d'utilisation dans au moins une mémoire (21, 22, 23) définissant et mémorisant des seuils (*Smin, Sint, Smax*) de performance acceptables du niveau d'utilisation par ressource et par application de la chaîne applicative.

La mesure des niveaux d'utilisation des ressources par des sondes de consommation, permet d'obtenir des informations pour les DSI (Directeurs des Systèmes Informatiques) sur le niveau actuel et prédictif (par des calculs) de la consommation des ressources d'une application donnée de la chaîne applicative. Dans certains modes de réalisation, les niveaux d'utilisation sont mesurés plusieurs fois, par exemple et non limitativement trois mesures ou plus, de sorte à pouvoir caractériser précisément et de façon fiable les différents niveaux de consommation ou d'utilisation des ressources. La mesure répétée des niveaux d'utilisation des ressources permet, d'une part, d'établir les seuils *(Smin, Sint, Smax)* de performance acceptable, c'est-à-dire le ou les seuils à partir duquel la performance de la ressource de l'application va être dégradée, et d'autre part, d'établir des intervalles (In) de consommation acceptable pour chaque ressource d'une application, c'est-à-dire les intervalles dans lesquels la performance de la ressource de l'application n'est pas dégradée et fonctionne correctement. Dans certains modes de réalisation, les seuils de performance du niveau d'utilisation comprennent trois seuils acceptables formant un triplet constitué d'un seuil minimal *(Smin),* un seuil intermédiaire *(Sint)* et un seuil maximal *(Smax)* pour chaque ressource et pour chaque application de la chaîne applicative. Ce triplet de seuils *(Smin, Sint, Smax)* est mémorisé dans au moins une mémoire (21, 22, 23) du référentiel d'utilisation (2) pour chaque ressource d'une application donnée de la chaîne applicative. Ces différents seuils présentent l'avantage de définir un indicateur ou une information fiable, facile à établir et contribuant à l'appréciation de l'état de la performance des applications par les DSI. Dans certains modes de réalisation, les intervalles (In) de consommation sont établis à partir des mesures des niveaux d'utilisation du référentiel de mesure (1), et mémorisés dans une mémoire (24) du référentiel d'utilisation (2) pour chaque ressource et par application de la chaîne applicative. Cet intervalle peut être calculé, par exemple, à partir des mesures des niveaux d'utilisation du référentiel de mesure (1) qui ont été effectuées antérieurement. En effet, ces mesures antérieures permettent d'établir une saisonnalité de l'utilisation ou de consommation de l'application et par conséquent du niveau d'utilisation de ressources sur chaque application physique ou virtuelle. L'intervalle de consommation peut être aussi calculé à partir des seuils *(Smin, Sint, Smax)* de performance acceptable pour chaque ressource et par application. Dans ce cas d'exemple, les intervalles de consommation peuvent être compris entre le seuil minimal de performance et le seuil intermédiaire, entre le seuil intermédiaire et le seuil maximal, ou entre le seuil minimal et le seuil maximal.

Le mécanisme de surveillance permet de comparer le niveau, d'utilisation des ressources, mesuré et mémorisé dans le référentiel de mesure (1) avec les seuils (*Smin, Sint, Smax*) et/ou les intervalles (In) de consommation établis, préalablement, dans le référentiel d'utilisation (2) pour chaque ressource et pour chaque application. Cette comparaison des niveaux d'utilisation mesurés avec les seuils et/ou les intervalles préétablis et mémorisés dans le référentiel d'utilisation, permet de mettre en place un mécanisme d'alerte (4), détaillé ci-dessous, lorsque le système détecte une contention potentielle et/ou un comportement anormal dans une ou plusieurs applications de la chaîne applicative, ou lorsque le problème est résolu. Ainsi, contrairement aux solutions des arts antérieurs, le système de la présente invention présente l'avantage de faire le lien entre une dégradation de performance d'une ressource et les applications du système d'information qui en seront impactées. La mise en place d'une surveillance et d'une alerte des applications du système d'information, selon les modes de réalisation de la présente invention, permet donc de corriger et prévenir des incidents en production.

Dans certains modes de réalisation, la mesure des niveaux d'utilisation pour établir et mémoriser les seuils *(Smin, Sint, Smax)* de performance acceptable et/ou les intervalles (In) de consommation pour chaque ressource et par application, peut être réalisée, préalablement, dans un environnement informatique de pré-production (environnement sur lequel sont partiellement exécutés les programmes de l'application) ou de qualification (environnement sur lequel sont testés les programmes de l'application). Cette démarche permet donc de mesurer et établir en amont, les seuils de performance acceptables et/ou les intervalles (In) de consommation pour chaque ressource et par application, de sorte à obtenir des seuils de performance et des intervalles de consommation au plus proche de la phase de production informatique et garantir une détection optimale de dégradations de performance applicative.

Dans certains modes de réalisation, la mesure des niveaux d'utilisation pour établir et mémoriser les seuils *(Smin, Sint, Smax)* de performance acceptable et/ou les intervalles (In) de consommation pour chaque ressource et par application, peut également être réalisée dans un environnement informatique de production, de sorte à redéfinir et affiner ces différents seuils de performance et d'intervalles de consommation préétablis et mémorisés dans le référentiel d'utilisation. Cette démarche permet de surveiller l'évolution des seuils de performance pour chaque ressource d'une application de la chaîne applicative, de remesurer et ré-établir pour obtenir une calibration optimale des seuils de performance et des intervalles de consommation pour chaque ressource et pour chaque application, pour pouvoir mettre en oeuvre des actions correctives en fonction de l'évolution de la dégradation ou non de la performance applicative.

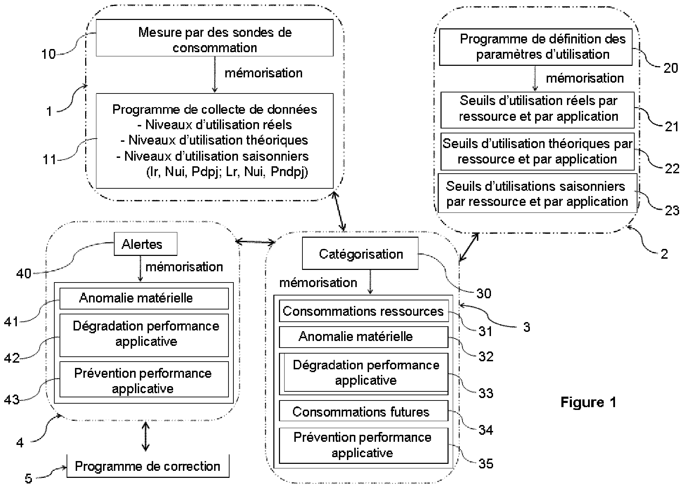

Dans certains modes de réalisation, comme représenté par exemple sur la figure 1, le référentiel d'utilisation (2) comprend au moins un agencement matériel et logiciel permettant d'établir et mémoriser dans au moins une mémoire les niveaux d'utilisation réel (21) et théorique (22) par les différents seuils *(Smin, Sint, Smax)* pour chaque ressource. Dans ce cas, on mémorisera un triplet (*Nuⱼ*, *Aᵢ*, *Rₚ*) ou un doublet ( *Nu*ⱼ, *Nurₚ*) pour l'interaction *LrRₚSᵢ* :
- dans une mémoire (21), la liste des niveaux d'utilisation réels *NumrRⱼ* pour chaque seuil *(Smin, Sint, Smax)* de chaque ressource *Rⱼ*;
- dans une mémoire (22), la liste des niveaux d'utilisation théoriques *NumtR_{q}* pour chaque seuil *(Smin, Sint, Smax)* de chaque ressource *R_{q}*.

Les niveaux d'utilisation théoriques de chaque ressource sont obtenus, par exemple et de manière non limitative, en fonction d'abaques concernant des infrastructures similaires (exemple: débit réseau ou disque). Quant aux niveaux d'utilisation réels de chaque ressource, ils sont obtenus, par exemple et de manière non limitative, en analysant les résultats des différentes sondes sur les différentes périodes.

Dans certains modes de réalisation, le référentiel de mesure (1) comprend un agencement matériel et logiciel permettant la mesure par des sondes de consommation et de mémoriser dans une mémoire (11) des niveaux d'utilisation « saisonnier » des ressources ou des applications ayant de fortes variations d'utilisation, de sorte à établir et mémoriser des seuils « saisonniers » *(Smin, Sint, Smax)* de performance acceptable du niveau d'utilisation, dans une mémoire (23) du référentiel d'utilisation (2) par ressource et par application. Dans ce cas, on mémorisera un triplet (*Nuⱼ, Aᵢ*, *Rₚ*) ou un doublet ( *Nu*ⱼ*, Nurₚ*) pour l'interaction *LrRₚSᵢ* :
- dans une mémoire (21), la liste des niveaux d'utilisation réels *NumrRⱼ* pour chaque seuil *(Smin, Sint, Smax)* de chaque ressource *Rⱼ*;
- dans une mémoire (22), la liste des niveaux d'utilisation théoriques *NumtR_{q}* pour chaque seuil *(Smin, Sint, Smax)* de chaque ressource *R_{q}*;
- dans une mémoire (23) la liste des niveaux d'utilisation réels *NumsRₒ* pour chaque seuil *(Smin, Sint, Smax)* de chaque ressource *Rₒ*.

Les niveaux d'utilisation saisonniers de chaque ressource sont obtenus, par exemple et de manière non limitative, en analysant les différentes sondes pendant un cycle complet d'utilisation pour chaque ressource de chaque application (par exemple une période d'un mois, d'un trimestre ou d'un an selon la variabilité d'utilisation de la ressource ou de l'application).

Le listage de ces paramètres permet de pouvoir réaliser les comparaisons des niveaux mesurés d'utilisation de ressources sur le ou les applications (ou serveurs) composant la chaîne applicative, avec les seuils *(Smin, Sint, Smax)* de performance acceptable du référentiel d'utilisation (2) en fonction de la ressource, de l'application et du type d'utilisation (utilisations réel, théorique et/ou saisonnier). Cette comparaison s'effectue sur des périodes *Pdpⱼ* durant lesquelles les problèmes de performance se produisent avec des périodes *Pndpⱼ* sans problèmes de performances. L'objectif est de vérifier que la ressource a atteint un niveau d'utilisation ou de consommation anormale ou proche du niveau maximum, et mettre en place un mécanisme d'alerte sur ce niveau d'utilisation de la ressource de l'application, de sorte à pouvoir corriger le comportement anormals des ressources de applications de la chaîne applicative. La réalisation de ces analyses comparatives des performances applicatives de façon automatique permet, ainsi, de réduire le temps des incidents en production.

Le système comprend aussi un module de catégorisation (3) des problèmes de performance en fonction des référentiels de mesure (1) et d'utilisation (2).

Le module de catégorisation (3) des problèmes de performance comprend au moins un agencement matériel et logiciel (30) permettant de constituer une catégorisation par une opération :
- de création d'une catégorie « consommations ressources» mémorisée dans une mémoire (31) et comprenant la consommation totale d'un niveau d'utilisation mesuré pour chaque ressource et chaque application de la chaîne applicative, ou
- de comparaison d'un niveau d'utilisation mesuré d'une ressource disponible dans le référentiel de mesure avec le seuil maximal de performance acceptable du niveau d'utilisation de chaque ressource d'une application disponible dans le référentiel d'utilisation afin de créer une catégorie « anomalie matérielle », mémorisée dans une mémoire (32), lorsque le niveau d'utilisation mesuré est au dessus du seuil maximum de la ressource, ou
- de comparaison d'un niveau d'utilisation mesuré d'une ressource disponible dans le référentiel de mesure dans l'intervalle (In) de consommation acceptable du niveau d'utilisation de chaque ressource d'une application disponible dans le référentiel d'utilisation, afin de créer une catégorie « dégradation performance applicative », mémorisée dans une mémoire (33), lorsque le niveau d'utilisation mesuré est hors de l'intervalle (In) de consommation acceptable de la ressource, ou

- de calcul des « consommations futures » de dégradation de performance par ressource et par application, à partir de l'association d'une règle de saisonnalité des besoins en ressources d'une application avec le niveau d'utilisation mesuré de la ressource de l'application disponibles dans le référentiel de mesure, mémorisé dans une mémoire (34) et
- de comparaison d'un résultat de calcul des consommations futures d'une ressource avec un seuil maximum de performance acceptable du niveau d'utilisation de chaque ressource d'une application disponible dans le référentiel d'utilisation, afin de créer une catégorie « prévention performance applicative », mémorisée dans une mémoire (35), lorsque le résultat du calcul des consommations futures de la ressource est au dessus du seuil maximum de performance acceptable de la ressource d'une application, ou par la combinaison d'au moins deux des opérations ci-dessus.

La création d'une catégorie « consommations ressources » dans une mémoire (31) (par exemple : IO réseau ou disques) s'effectue en utilisant une règle qui consiste à catégoriser ou classer en « consommations ressources » toute ressource *Rⱼ* dont les niveaux d'utilisation *Nurⱼ* sont identifiés sur les différents applications (*Aₖ*, *Aₗ*,...) composant la chaîne applicative, l'identifiant de ladite ressource *Rⱼ* étant stockée dans la mémoire (31) dédiée aux «consommations ressources ». Cette création est réalisée au moyen des interactions entre les ressources des applications disponibles dans la mémoire du référentiel de mesure (1) afin de créer, par ressource et par application, un niveau d'utilisation général *NuGrⱼ* de ladite ressource *Rⱼ*. Le niveau d'utilisation général *NuGrⱼ* est obtenu en effectuant la somme *ΣNurAᵢ* totale de tous les niveaux *Nurⱼ* d'une ressource utilisée sur chaque application Aᵢ, et représente la consommation totale mesurée de la ressource *Rⱼ* sur une application donnée de la chaîne applicative.

La création d'une catégorie « anomalie matérielle » dans la mémoire (32) s'effectue par l'utilisation de la règle suivante : lorsque les niveaux mesurés d'utilisation des ressources *Nurⱼ* ont atteints ou dépassés le seuil maximal de performance acceptable des niveaux d'utilisation réels *NumrRⱼ* et/ou théoriques *NumtRⱼ* et/ou saisonniers *NumsRⱼ* pour chaque ressource *Rⱼ* disponible dans le référentiel d'utilisation (2), le système créé l'anomalie suite, par exemple, à la saturation d'une ressource d'une application de la chaîne applicative.

La création d'une catégorie « dégradation performance applicative » dans une mémoire (33), s'effectue par l'utilisation de la règle suivante : lorsque les niveaux mesurés d'utilisation des ressources *Nurⱼ* sont hors de leur intervalle de consommation des niveaux d'utilisation pour chaque ressource *Rⱼ* disponible dans le référentiel d'utilisation (2). Ceci est le cas, par exemple, lors d'un comportement anormal d'une ressource d'une application de la chaîne applicative (tel qu'une application hors d'usage ou un problème sur une instance des cluster entraînant une dégradation des SLA, etc.).

La création d'une catégorie « consommations futures » dans une mémoire (34), s'effectue à partir des règles dites de « saisonnalité » et le niveau d'utilisation actuel des ressources. On notera que le niveau d'utilisation d'une ressource ou d'une application peut varier dans le temps (par exemple, un ou plusieurs moments de la journée, de la semaine, du mois ou de l'année), entraînant des variations du niveau d'utilisation des ressources sur les différentes applications composant la chaîne applicative. Par exemple, certaines applications peuvent être moins sollicitées le mercredi, ce qui peut s'expliquer par les congés hebdomadaires habituels des personnes à temps partiel. Autre exemple non limitatif, les applications financières connaissent généralement de fort niveaux d'utilisation en période de clôture mensuelle ou trimestrielle. Ainsi, l'ensemble des évolutions de l'utilisation d'une application peut être défini par des règles de saisonnalités qui sont variables selon l'application (notamment dû au comportement des utilisateurs de l'application et des activités métiers) et évolutives dans le temps. Ceci explique la nécessité de recourir à un système permettant de surveiller et alerter, de façon automatique et en continue, les problèmes de performance applicative d'un système d'information.

La création d'une catégorie « prévention performance applicative » dans une mémoire (35), s'effectue par l'utilisation de la règle suivante : lorsque les résultats du calcul des consommations futures à partir des niveaux mesurés d'utilisation des ressources *Nurⱼ* montrent un risque de saturation de l'application. Par exemple et non limitativement, si les règles de saisonnalités pour une ressource tel qu'un CPU prévoient qu'à une période P₀+60m (m définissant une durée quelconque), le niveau d'utilisation (c'est-à-dire la consommation future) de la ressource sera de 3,2 fois plus importante qu'à la période donnée P₀. De ce fait, si à une période P₀, le niveau mesuré d'utilisation de la ressource d'un CPU est de 26% de la taille totale du CPU. Le résultat de la consommation future pour cette ressource, obtenu par une multiplication du niveau d'utilisation mesuré par la prévision des règles de saisonnalité (selon la règle de saisonnalité à la date Dt= P₀+60m, le 26% du niveau d'utilisation est multiplié par 3,2 et donnant un résultat de 83,2% de la taille totale du CPU), sera importante montrant un risque de saturation et une alerte sera mise en place pour pouvoir corriger le problème de saturation du CPU (par exemple, en augmentant la mémoire du CPU).

Le système comprend également un agencement matériel et logiciel informatique (40) permettant de mettre en oeuvre un mécanisme d'alerte (4) lorsque le mécanisme de surveillance détecte un problème de performance d'une ou plusieurs applications dans la chaîne applicative ou lorsque le problème est résolu.

Le mécanisme d'alerte permet de créer et mémoriser dans au moins une mémoire (41, 42, 43) au moins une ou plusieurs des alertes ci-après, la dernière n'étant pas optionnelle:
- une alerte « anomalie matérielle » lorsque le niveau d'utilisation d'une ressource d'une application disponible dans le référentiel de mesure, est au dessus d'un seuil maximal de performance acceptable de ladite ressource disponible dans le référentiel d'utilisation ;
- une alerte « dégradation performance applicative » lorsque le niveau d'utilisation d'une ressource d'une application disponible dans le référentiel de mesure, est hors de l'intervalle (In) de consommation acceptable de ladite ressource disponible dans le référentiel d'utilisation ;
- une alerte « préventive performance applicative » lorsque le résultat de calcul des consommations futures d'une ressource d'une application disponible dans la mémoire du module de catégorisation, est au dessus d'un seuil maximal de performance acceptable de ladite ressource disponible dans le référentiel d'utilisation.

L'alerte « anomalie matérielle » est mémorisée dans une mémoire (41), lorsqu'un niveau d'utilisation en production est anormal, de sorte à mettre en place une action correctrice. Cette action correctrice permet généralement de modifier la configuration hardware ou software de la machine informatique virtuelle ou physique, telle que par exemple et non limitativement, augmenter la mémoire ou le processeur, libérer de l'espace du disque (par ajout d'espace ou par suppression de fichier, etc.).

L'alerte « dégradation performance applicative » est mémorisée dans une mémoire (42), lorsqu'une dégradation de performance sur la chaîne applicative est détectée, de sorte à mettre en place une action correctrice adéquate. Cette action correctrice permet généralement de surveiller le ou les applications pour déterminer l'origine du problème, telle que par exemple et non limitativement, une application hors service, un problème sur une instance de cluster qui entraine une dégradation des SLA, etc. Cette alerte est mise en place lorsque le niveau mesuré d'utilisation d'une ressource est hors de l'intervalle (In) de consommation acceptable de cette ressource préétablie et mémorisé dans le référentiel d'utilisation du système. Cet intervalle peut être établi à partir des mesures antérieures des niveaux d'utilisation pour chaque ressource d'une application, ou à partir d'un intervalle de consommation acceptable du niveau d'utilisation par ressource et par application.

L'alerte « préventive performance applicative » est mémorisée dans une mémoire (43), lorsque le système a pour objectif de prévenir et anticiper un problème futur, de sorte à mettre en place des préconisations d'évolution de performance pour la ou les ressources concernées. Ainsi, s'agissant d'anticiper la consommation future des ressources des applications, un programme correcteur sera mis en place dans un délai tardif. Cette configuration permet donc de gagner du temps pour pouvoir mettre en place un programme correcteur optimal qui limitera et corrigera les problèmes de performance applicative.

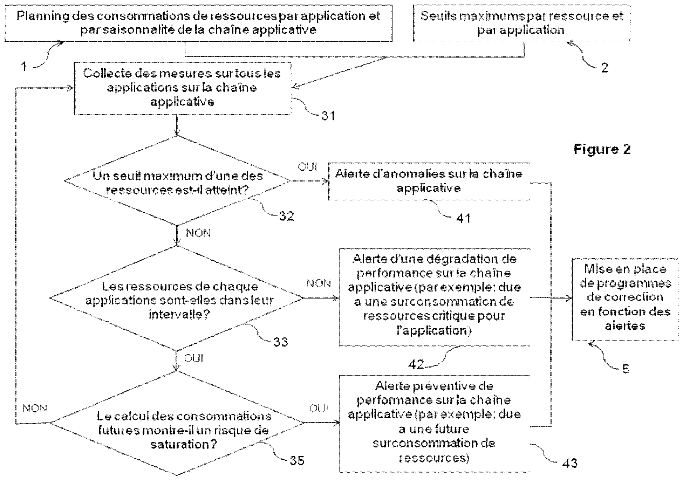

Dans certains modes de réalisation, le système comprend un agencement matériel et logiciel comprenant un programme de correction (5). En effet, comme représenté par exemple sur les figures 1 et 2, les différents types d'alertes sont analysés par un programme de traitement pour pouvoir mettre en place le programme de correction (5) adéquat selon l'alerte détectée par le système.

Dans certains modes de réalisation, le système est apte à surveiller et alerter en continu une anomalie sur une ou plusieurs applications de la chaîne applicative, ou une dégradation de la performance sur la chaîne applicative due à une surconsommation de ressources critiques pour l'application ou d'une future surconsommation de ressources.

Comme par exemple représenté sur la figure 2, le mécanisme de surveillance permet de collecter des mesures des niveaux d'utilisation pour chaque ressource et par application qui seront catégorisées et stockées dans la mémoire (31) du module de catégorisation (3), afin d'identifier les problèmes de performance :
- par comparaison avec les seuils *(Smin, Sint, Smax)* de performance établis précédemment pour chaque ressource et pour chaque application, en particulier, une ressource qui aura atteint le seuil maximum de performance, va être catégorisé et mémorisé dans la mémoire (32) du module de catégorisation (3) par le système; ou
- par comparaison avec les intervalles (In) de consommation préétablis pour chaque ressource et pour chaque application, en particulier, une ressource qui sera hors de son intervalle de consommation acceptable, va être catégorisé et mémorisé dans la mémoire (33) du module de catégorisation (3) par le système; ou
- en calculant les consommations futures pour chaque ressource et pour chaque application, en particulier, une ressource qui aura un risque de problème de performance, va être catégorisé et mémorisé dans la mémoire (34) du module de catégorisation (3) par le système.

Lorsque le niveau d'utilisation est anormal, le système permet de mettre en place des leviers d'amélioration grâce à des alertes automatiques et en continues. Ainsi, en fonction du problème de performance détecté, le système met en place un mécanisme d'alerte (4) et un programme de correction (5) adapté. Par exemple, lorsque le module de catégorisation (3) indique que le niveau mesuré d'utilisation d'une ressource a atteint son seuil maximum de performance acceptable, le mécanisme d'alerte établi une alerte « anomalie matérielle » dans la mémoire (41) permettant de mettre en place un programme de correction adapté sur ladite ressource. Lorsque le module de catégorisation (3) indique que le niveau d'utilisation d'une ressource est hors de l'intervalle de consommation acceptable, le mécanisme d'alerte établi une alerte « dégradation performance applicative » dans la mémoire (42) permettant de mettre en place un programme de correction adapté sur ladite ressource. Enfin, lorsque le module de catégorisation (3) indique que le niveau d'utilisation d'une ressource présente un risque de dégradation, par exemple une saturation de ressource, le mécanisme d'alerte établi une alerte « préventive performance applicative » dans la mémoire (43) permettant de mettre en place un programme de correction adapté sur ladite ressource.

La présence invention concerne également un procédé de surveillance des performances des applications d'une chaîne applicative et de commande d'un système selon un des modes de réalisation de la présente demande. Le procédé comprenant :
- une étape de mesure et de mémorisation du niveau d'utilisation des ressources pour chaque application de la chaîne applicative pour pouvoir caractériser les différents niveaux de consommation de ressources ;
- une étape de mesure et de mémorisation des besoins en ressources des différents composants d'une application ;
- une étape de construction d'un référentiel d'utilisation (2) à partir des données obtenues dans les étapes de mesure et de mémorisation des niveaux d'utilisation des ressources et des besoins en ressources des applications, de sorte à établir un seuil minimum *(Smin),* un seuil maximum *(Smax)* et un seuil intermédiaire *(Sint)* pour chaque ressource mesurée et pour chaque application;
- une étape de catégorisation et de mémorisation des problèmes de performance d'une ou plusieurs ressources à partir du référentiel d'utilisation (2) et des données obtenues dans les étapes de mesure et de mémorisation des niveaux d'utilisation des ressources et des besoins en ressources des applications de la chaîne applicative ;
- une étape de comparaison des niveaux d'utilisation mesurés avec les seuils de performance acceptable à partir des problèmes de performance de l'étape de catégorisation ;
- une étape de mise en place d'une alerte des problèmes de performance à partir des données obtenues dans l'étape de comparaison, de sorte à corriger le ou les problèmes de performance en modifiant la chaîne applicative ou les ressources d'une application de la chaîne applicative.

Dans certains modes de réalisation, l'étape de comparaison des niveaux d'utilisation mesurés avec les seuils de performance acceptable, est réitérée continuellement de sorte à surveiller et alerter en continu les applications de la chaîne applicative.

Comme représenté par exemple sur la figure 2, les mesures des niveaux d'utilisation pour chaque ressource par application et par saisonnalité de la chaîne applicative du référentiel de mesure (1), sont catégorisées et mémorisées dans la mémoire (31) du module de catégorisation (3). Ces mesures sont comparées soit avec les seuils de performance acceptable, soit avec les intervalles de consommation acceptable préétablis, qui ont été préétablis pour chaque ressource et par application, pour surveiller et alerter les DSI des problèmes de performance applicative sur la chaîne applicative. Ces mesures des niveaux d'utilisation du référentiel de mesure (1) sont comparées en trois différentes étapes :
- tout d'abord, une première étape dans laquelle le niveau mesuré est comparé avec le seuil maximal *(Smax)* de performance du référentiel d'utilisation (2), une alerte (41) anomale applicative sera mise en place par le système lorsque le niveau d'utilisation a atteint son seuil maximum de performance ;
- ensuite, si la première étape ne révèle pas d'anomalie, alors dans une seconde étape, le niveau d'utilisation est comparé avec l'intervalle (In) de consommation du référentiel d'utilisation (2), une alerte (42) « dégradation performance applicative » sera mise en place par le système lorsque le niveau d'utilisation est hors de son intervalle de consommation ;

- puis, si la deuxième étape ne révèle pas de dégradation de performance, alors dans une troisième étape, un calcul de consommation future est réalisé à partir du niveau d'utilisation mesurés, une alerte (43) « préventive performance applicative » sera mise en place par le système lorsque la mesure du niveau d'utilisation indique un risque de saturation de ressource;
- enfin, si la troisième étape ne révèle pas de risque de saturation de ressource, alors une nouvelle mesure du niveau d'utilisation sera réalisée afin de surveiller et alerter automatiquement et régulièrement lorsqu'un problème de performance intervient dans la chaîne applicative.

Ces différentes étapes du procédé sont donc réalisées continuellement de façon automatique, pour pouvoir optimiser le pilotage des opérations informatiques en limitant ou sans problèmes de performance dans le système informatique. Le procédé de surveillance des performances applicatives de la présente invention, présente l'avantage d'identifier rapidement et automatiquement les dégradations de performance applicative et de mettre en place un plan d'amélioration continue et adapté pour chaque application du système informatique de l'entreprise.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Système de surveillance des performances des applications d'une chaîne applicative comprenant au moins une machine informatique et un logiciel ou code exécutable par la machine pour mettre en oeuvre un mécanisme de surveillance des performances desdites applications d'une chaîne applicative, ledit système comprenant
- un agencement matériel et logiciel d'informatique formant un référentiel de mesure (1), ledit référentiel de mesure (1) comprenant un agencement matériel et logiciel (10) permettant, d'une part, la mesure des niveaux d'utilisation (Nurᵢ) des ressources (Ri) des applications (Aᵢ) sur l'ensemble des serveurs constituant la chaîne applicative par des sondes informatique, dites de consommation, installées sur les ressources des applications lors des périodes (Pdpi) de dégradation des performances d'une ou plusieurs application(s) de la chaîne applicative, et d'autre part, la mémorisation de ces niveaux d'utilisation dans une mémoire (11) du référentiel de mesure (1), en les associant par application et par période de la chaîne applicative ;
- un agencement matériel et logiciel (20) d'établissement d'un référentiel d'utilisation (2) configuré pour établir et mémoriser dans au moins une mémoire (21, 22, 23), des seuils *(Smin, Sint, Smax)* de performance acceptables du niveau d'utilisation par ressource et par application, à partir des données du référentiel de mesure (1), lesdits seuils comportant au moins un seuil maximal de performance acceptable (*Smax*) ;
le système étant **caractérisé en ce qu'**il comprend
- un module de catégorisation (3) des problèmes de performance en fonction des niveaux d'utilisation disponible dans le référentiel de mesure (1) et des seuils de performance acceptable des niveaux d'utilisation des ressources disponibles dans le référentiel d'utilisation (2), ledit module de catégorisation permettant d'établir la catégorisation par une opération de comparaison d'un résultat de calcul des consommations futures d'une ressource avec un seuil maximum de performance acceptable du niveau d'utilisation de chaque ressource d'une application disponible dans le référentiel d'utilisation (2), afin de créer une catégorie « prévention performance applicative », mémorisée dans une mémoire (35), lorsque le résultat du calcul des consommations futures de la ressource est au-dessus du seuil maximum de performance acceptable de la ressource d'une application, ledit calcul des consommations futures de dégradation de performance par ressource et par application étant déterminé à partir de l'association d'une règle de saisonnalité des besoins en ressources d'une application avec le niveau d'utilisation mesuré de la ressource de l'application disponibles dans le référentiel de mesure (1), mémorisé dans une mémoire (34) ; et
- un agencement matériel et logiciel informatique (40) configuré pour mettre en oeuvre un mécanisme d'alerte (4), en créant et en mémorisant dans au moins une mémoire (41, 42, 43) au moins une alerte à partir des données des référentiels de mesure (1) et d'utilisation (2) catégorisées dans le module de catégorisation (3), lorsque le mécanisme de surveillance détecte un problème de performance d'une ou plusieurs applications dans la chaîne applicative ou lorsque le problème est résolu, la au moins une alerte étant une alerte « préventive performance applicative » lorsque le résultat de calcul des consommations futures d'une ressource d'une application disponible dans la mémoire du module de catégorisation (3), est au-dessus d'un seuil maximal *(Smax)* de performance acceptable de ladite ressource disponible dans le référentiel d'utilisation (2).

2. Système selon la revendication 1, **caractérisé en ce que** les seuils *(Smin, Sint, Smax)* de performance acceptable du niveau d'utilisation, comprennent trois seuils acceptables formant un triplet et constitué d'un seuil minimal *(Smin),* du seuil maximal *(Smax)* et un seuil intermédiaire *(Sint)* ; ce triplet de seuils *(Smin, Sint, Smax)* étant mémorisé pour chaque ressource et pour chaque application de la chaîne applicative.

3. Système selon l'une des revendications précédentes, **caractérisé en ce que** le référentiel d'utilisation (2) comprend au moins un agencement matériel et logiciel (20) permettant d'établir et mémoriser dans une mémoire (24), des intervalles (In) de consommation acceptable définis à partir des mesures du niveau d'utilisation du référentiel de mesure (1).

4. Système selon l'une des revendications précédentes, **caractérisée en ce que** le mécanisme de surveillance est apte à comparer le niveau d'utilisation des ressources, mesuré et mémorisé dans le référentiel de mesure (1) avec les seuils *(Smin, Sint, Smax)* et/ou des intervalles (In) de consommation établis dans le référentiel d'utilisation (2) par application.

5. Système selon ligne des revendications précédentes, **caractérisé en ce que** le référentiel d'utilisation (2) comprend au moins un agencement matériel et logiciel (20) permettant d'établir et mémoriser dans une mémoire les niveaux d'utilisation réelle (21) et théorique (22) par seuil (Smin, Sint, Smax) pour chaque ressource.

6. Système selon l'une des revendications précédentes, **caractérisée en ce que** les niveaux d'utilisation des ressources des applications, sont mesurés plusieurs fois de sorte à caractériser les différents niveaux de consommation de ressources des applications.

7. Système selon l'une des revendications précédentes, **caractérisée en ce que** la mesure des niveaux d'utilisation des ressources des applications, est réalisée dans un environnement de pré-production ou de qualification.

8. Système selon l'une des revendications précédentes, **caractérisée en ce que** la mesure des niveaux d'utilisation des ressources des applications, est également réalisée dans un environnement de production, de sorte à affiner, si nécessaire, les seuils *(Smin, Smint, Smax)* de performance acceptable du niveau d'utilisation et/ou les intervalles (In) de consommation pour chaque ressource et par application.

9. Système selon l'une des revendications précédentes, **caractérisée en ce que** le référentiel de mesure (1) comprend un agencement matériel et logiciel permettant la mesure par des sondes de consommation et la mémorisation dans une mémoire (23) des niveaux d'utilisation « saisonnier » des ressources ou des applications ayant de fortes variations saisonnières d'utilisation, de sorte à établir et mémoriser des seuils « saisonniers » *(Smin, Sint, Smax)* de performance acceptable du niveau d'utilisation par ressources et par application.

10. Système selon l'une des revendications précédentes, **caractérisé en ce que** le module de catégorisation (3) des problèmes de performance permet en outre d'établir la catégorisation par une opération :
- de création d'une catégorie « consommations ressources » mémorisée dans une mémoire (31) et comprenant la consommation totale d'un niveau d'utilisation mesuré pour chaque ressource et chaque application de la chaîne applicative, ou
- de comparaison d'un niveau d'utilisation mesuré d'une ressource disponible dans le référentiel de mesure (1) avec le seuil maximal *(Smax)* de performance acceptable du niveau d'utilisation de chaque ressource d'une application disponible dans le référentiel d'utilisation (2) afin de créer une catégorie « anomalie matérielle », mémorisée dans une mémoire (32), lorsque le niveau d'utilisation mesuré est au dessus du seuil maximum *(Smax)* de la ressource, ou
- de comparaison d'un niveau d'utilisation mesuré d'une ressource disponible dans le référentiel de mesure (1) avec l'intervalle (In) de consommation acceptable du niveau d'utilisation pour chaque ressource d'une application disponible dans une mémoire (24) du référentiel d'utilisation (2), afin de créer une catégorie « dégradation performance applicative », mémorisée dans une mémoire (33), lorsque le niveau d'utilisation mesuré est hors de l'intervalle (In) de consommation acceptable de la ressource, ou
- ou de combinaison d'au moins deux des opérations ci-dessus.

11. Système selon l'une des revendications précédentes, **caractérisée en ce que** le mécanisme d'alerte (4) permet en outre de créer et mémoriser dans au moins une mémoire (41, 42, 43) au moins une ou plusieurs des alertes ci-après :
- une alerte « anomalie matérielle » lorsque le niveau d'utilisation d'une ressource d'une application disponible dans le référentiel de mesure (1), est au-dessus d'un seuil maximal *(Smax)* de performance acceptable de ladite ressource disponible dans le référentiel d'utilisation (2);
- une alerte « dégradation performance applicative » lorsque le niveau d'utilisation d'une ressource d'une application disponible dans le référentiel de mesure (1), est hors de l'intervalle (In) de consommation acceptable de ladite ressource disponible dans le référentiel d'utilisation (2).

12. Système selon l'une des revendications précédentes, **caractérisé en ce que** le système est apte à surveiller et alerter en continu d'une anomalie sur une ou plusieurs applications de la chaîne applicative, ou d'une dégradation de la performance de la chaîne applicative due à une surconsommation de ressources critiques pour l'application ou d'une future surconsommation de ressources.

13. Procédé de surveillance des performances des applications d'une chaîne applicative et de commande d'un système selon une des revendications 2 à 12, le procédé comprenant :
- une étape de mesure et de mémorisation du niveau d'utilisation des ressources pour chaque application de la chaîne applicative pour pouvoir caractériser les différents niveaux de consommation de ressources ;
le procédé étant **caractérisé en ce qu'**il comprend en outre :
- une étape de mesure et de mémorisation des besoins en ressources des différents composants d'une application;
- une étape de construction d'un référentiel d'utilisation (2) à partir des données obtenues dans les étapes de mesure et de mémorisation des niveaux d'utilisation des ressources et des besoins en ressources des applications, de sorte à établir des seuils (Smin, Sint, Smax) de performance acceptables du niveau d'utilisation pour chaque ressource mesurée et pour chaque application;
- une étape de catégorisation et de mémorisation des problèmes de performance d'une ou plusieurs ressources à partir du référentiel d'utilisation (2) et des données obtenues dans les étapes de mesure et de mémorisation des niveaux d'utilisation des ressources et des besoins en ressources des applications de la chaîne applicative;
- une étape de comparaison des niveaux d'utilisation mesurés avec les seuils *(Smin, Sint, Smax)* de performance acceptable à partir des problèmes de performance de l'étape de catégorisation;
- une étape de mise en place d'une alerte des problèmes de performance à partir des données obtenues dans l'étape de comparaison, de sorte à corriger le ou les problèmes de performance en modifiant la chaîne applicative ou les ressources d'une application de la chaîne applicative.

14. Procédé selon la revendication 13, **caractérisé en ce que** l'étape de comparaison des niveaux d'utilisation mesurés avec les seuils *(Smin, Sint, Smax)* de performance acceptable, est réitérée continuellement de sorte à surveiller et alerter en continu les applications de la chaîne applicative.

## Patentansprüche

1. System zur Überwachung der Leistungen von Anwendungen einer Anwendungskette, umfassend mindestens eine Rechenmaschine und Software oder einen Code, die/der von der Maschine ausführbar ist, um einen Mechanismus zur Überwachung der Leistungen der Anwendungen einer Anwendungskette zu implementieren, wobei das System umfasst:
- eine Hardware- und Software-Anordnung eines Computers, die ein Messbezugssystem (1) bildet, wobei das Messbezugssystem (1) eine Hardware- und Software-Anordnung (10) umfasst, die einerseits die Messung der Nutzungsniveaus (Nurᵢ) der Ressourcen (Ri) von Anwendungen (Ai) auf der Gesamtheit der Server, die die Anwendungskette bilden, durch Rechensensoren, sogenannte Verbrauchssensoren, die während Zeiträumen (Pdpi) der Verschlechterung der Leistungen einer oder mehrerer Anwendung(en) der Anwendungskette auf Anwendungsressourcen installiert werden, und andererseits die Speicherung dieser Nutzungsniveaus in einem Speicher (11) des Messbezugssystems (1) bei dem Zuordnen dieser nach Anwendung und nach Zeitraum der Anwendungskette ermöglicht;
- eine Hardware- und Software-Anordnung (20) einer Einrichtung eines Nutzungsbezugssystems (2), die konfiguriert ist, um aus Daten des Messbezugssystems (1) Schwellenwerte *(Smin, Sint, Smax)* akzeptabler Leistung des Nutzungsniveaus nach Ressource und nach Anwendung zu ermitteln und in mindestens einem Speicher (21, 22, 23) zu speichern, wobei die Schwellenwerte mindestens einen maximalen Schwellenwert *(Smax)* akzeptabler Leistung aufweisen;
wobei das System **dadurch gekennzeichnet ist, dass** es umfasst:
- ein Modul (3) zur Kategorisierung von Leistungsproblemen in Abhängigkeit von den Nutzungsniveaus, die in dem Messbezugssystem (1) verfügbar sind, und den Schwellenwerten akzeptabler Leistung der Nutzungsniveaus der Ressourcen, die in dem Nutzungsbezugssystem (2) verfügbar sind, wobei das Kategorisierungsmodul ein Festlegen der Kategorisierung, durch eine Operation zum Vergleich eines Ergebnisses einer Berechnung von zukünftigen Verbräuchen einer Ressource mit einem maximalen Schwellenwert akzeptabler Leistung des Nutzungsniveaus jeder Ressource einer Anwendung, die in dem Nutzungsbezugssystem (2) verfügbar ist, um eine Kategorie "Anwendungsleistungsverhinderung" zu erstellen, die in einem Speicher (35) gespeichert wird, wenn das Ergebnis der Berechnung von zukünftigen Verbräuchen der Ressource über dem maximalen Schwellenwert akzeptabler Leistung der Ressource einer Anwendung liegt, die Berechnung von zukünftigen Verbräuchen die Leistungsverschlechterung nach Ressource und nach Anwendung aus der Verknüpfung einer Saisonalitätsregel von Bedarfen bei Ressourcen einer Anwendung mit dem gemessenen Nutzungsniveau der in dem Messbezugssystem (1) verfügbaren Ressource der Anwendung bestimmt wird, die in einem Speicher (34) gespeichert wird; und
- eine Hardware- und Software-Anordnung (40) eines Computers, die konfiguriert ist, um einen Warnsignalmechanismus (4) bei Erstellen und bei Speichern in mindestens einem Speicher (41, 42, 43) mindestens eines Warnsignals von den Daten des Mess- (1) und des Nutzungsbezugssystems (2), die in dem Kategorisierungsmodul (3) kategorisiert werden, zu implementieren, wenn der Überwachungsmechanismus ein Leistungsproblem einer oder mehrerer Anwendungen in der Anwendungskette erkennt oder wenn das Problem behoben ist, wobei es sich bei dem mindestens einen Warnsignal um ein Warnsignal für eine "vorbeugende Anwendungsleistung" handelt, wenn das Ergebnis der Berechnung von zukünftigen Verbräuchen einer Ressource einer in dem Speicher des Kategorisierungsmoduls (3) verfügbaren Anwendung über einem maximalen Schwellenwert *(Smax)* akzeptabler Leistung der in dem Nutzungsbezugssystem (2) verfügbaren Ressource liegt.

2. System nach Anspruch 1, **dadurch gekennzeichnet, dass** die Schwellenwerte *(Smin, Sint, Smax)* akzeptabler Leistung des Nutzungsniveaus drei akzeptable Schwellenwerte umfassen, die ein Triplett ausbilden und aus einem minimalen Schwellenwert *(Smin),* dem maximalen Schwellenwert *(Smax)* und einem Zwischenschwellenwert *(Sint)* bestehen; wobei dieses Triplett von Schwellenwerten *(Smin, Sint, Smax)* für jede Ressource und für jede Anwendung in der Anwendungskette gespeichert wird.

3. System nach einem der vorstehenden Ansprüche,
**dadurch gekennzeichnet, dass** das Nutzungsbezugssystem (2) mindestens eine Hardware- und Software-Anordnung (20) umfasst, die es ermöglicht, Intervalle (In) des akzeptablen Verbrauchs, die aus Messungen des Nutzungsniveaus des Messbezugssystems (1) definiert werden, festzulegen und in einem Speicher (24) zu speichern.

4. System nach einem der vorstehenden Ansprüche,
**dadurch gekennzeichnet, dass** der Überwachungsmechanismus geeignet ist, das Nutzungsniveau der Ressourcen, das in dem Messbezugssystem (1) gemessen und gespeichert wird, mit den Schwellenwerten *(Smin, Sint, Smax)* und/oder den Verbrauchsintervallen (In), die in dem Nutzungsbezugssystem (2) pro Anwendung festgelegt sind, zu vergleichen.

5. System nach den vorstehenden Ansprüchen,
**dadurch gekennzeichnet, dass** das Nutzungsbezugssystem (2) mindestens eine Hardware- und Software-Anordnung (20) umfasst, die es ermöglicht, die tatsächlichen (21) und theoretischen Nutzungsniveaus (22) pro Schwellenwert (Smin, Sint, Smax) für jede Ressource festzustellen und in einem Speicher zu speichern.

6. System nach einem der vorstehenden Ansprüche,
**dadurch gekennzeichnet, dass** die Nutzungsniveaus der Ressourcen der Anwendungen mehrere Male gemessen werden, um die unterschiedlichen Verbrauchsniveaus der Ressourcen der Anwendungen zu bestimmen.

7. System nach einem der vorstehenden Ansprüche,
**dadurch gekennzeichnet, dass** die Messung der Nutzungsniveaus der Ressourcen der Anwendungen in einer Vorproduktions- oder Qualifizierungsumgebung durchgeführt wird.

8. System nach einem der vorstehenden Ansprüche,
**dadurch gekennzeichnet, dass** die Messung der Nutzungsniveaus der Ressourcen der Anwendungen auch in einer Produktionsumgebung durchgeführt wird, um bei Bedarf die Schwellenwerte *(Smin, Smint, Smax)* akzeptabler Leistung des Nutzungsniveaus und/oder die Verbrauchsintervalle (In) für jede Ressource und nach Anwendung zu verfeinern.

9. System nach einem der vorstehenden Ansprüche,
**dadurch gekennzeichnet, dass** das Messbezugssystem (1) eine Hardware- und Software-Anordnung umfasst, die die Messung durch Verbrauchssensoren und die Speicherung der "saisonalen" Nutzungsniveaus der Ressourcen oder der Anwendungen, die starke saisonale Nutzungsschwankungen besitzen, in einem Speicher (23), um "saisonale" Schwellenwerte *(Smin, Sint, Smax)* akzeptabler Leistung des Nutzungsniveaus durch Ressourcen und durch die Anwendung festzulegen und zu speichern.

10. System nach einem der vorstehenden Ansprüche,
**dadurch gekennzeichnet, dass** das Kategorisierungsmodul (3) für Leistungsprobleme es ferner ermöglicht, die Kategorisierung durch eine Operation festzulegen:
- Erstellen einer Kategorie "Ressourcenverbräuche", die in einem Speicher (31) gespeichert ist und den Gesamtverbrauch eines Nutzungsniveaus umfasst, das für jede Ressource und jede Anwendung der Anwendungskette gemessen wird, oder
- Vergleichen eines gemessenen Nutzungsniveaus einer in dem Messbezugssystem (1) verfügbaren Ressource mit dem maximalen Schwellenwert *(Smax)* akzeptabler Leistung des Nutzungsniveaus jeder Ressource einer Anwendung, die in dem Nutzungsbezugssystem (2) verfügbar ist, um eine "Hardware-Anomalie"-Kategorie zu erstellen, die in einem Speicher (32) gespeichert wird, wenn das gemessene Nutzungsniveau über dem maximalen Schwellenwert *(Smax)* der Ressource liegt, oder
- Vergleichen eines gemessenen Nutzungsniveaus einer in dem Messbezugssystem (1) verfügbaren Ressource mit dem Intervall (In) des akzeptablen Verbrauchs des Nutzungsniveaus für jede Ressource einer Anwendung, die in einem Speicher (24) des Nutzungsbezugssystems (2) verfügbar ist, um eine Kategorie "Anwendungsleistungsverschlechterung" zu erstellen, die in einem Speicher (33) gespeichert wird, wenn das gemessene Nutzungsniveaus außerhalb des Intervalls (In) des akzeptablen Verbrauchs der Ressource liegt, oder
- oder eine Kombination aus mindestens zwei der oben genannten Operationen.

11. System nach einem der vorstehenden Ansprüche,
**dadurch gekennzeichnet, dass** der Warnsignalmechanismus (4) es ferner ermöglicht, mindestens ein oder mehrere der nachfolgenden Warnsignale zu erstellen und in mindestens einem Speicher (41, 42, 43) zu speichern:
- ein "Hardware-Anomalie"-Warnsignal, wenn das Nutzungsniveau einer in dem Messbezugssystem (1) verfügbaren Ressource einer Anwendung über einem maximalen Schwellenwert *(Smax)* akzeptabler Leistung der verfügbaren Ressource in dem Nutzungsbezugssystem (2) liegt;
- ein Warnsignal "Anwendungsleistungsverschlechterung", wenn das Nutzungsniveau einer in dem Messbezugssystem (1) verfügbaren Ressource einer Anwendung außerhalb des Intervalls (In) des akzeptablen Verbrauchs der in dem Nutzungsbezugssystem (2) verfügbaren Ressource liegt.

12. System nach einem der vorstehenden Ansprüche,
**dadurch gekennzeichnet, dass** das System geeignet ist, eine Anomalie bei einer oder mehreren Anwendungen der Anwendungskette oder eine Verschlechterung der Leistung der Anwendungskette aufgrund eines übermäßigen Verbrauchs kritischer Ressourcen für die Anwendung oder eines zukünftigen übermäßigen Verbrauchs der Ressourcen kontinuierlich zu überwachen und vor diesen zu warnen.

13. Verfahren zum Überwachen der Leistungen von Anwendungen einer Anwendungskette und Steuern eines Systems nach einem der Ansprüche 2 bis 12, das Verfahren umfassend:
- einen Schritt zum Messen und Speichern des Nutzungsniveaus von Ressourcen für jede Anwendung der Anwendungskette, um die verschiedenen Verbrauchsniveaus der Ressourcen bestimmen zu können;
wobei das Verfahren **dadurch gekennzeichnet ist, dass** es ferner umfasst:
- einen Schritt zum Messen und Speichern der Bedarfe der Ressourcen der verschiedenen Komponenten einer Anwendung;
- einen Schritt eines Konstruierens eines Nutzungsbezugssystems (2) aus den Daten, die in den Schritten des Messens und des Speicherns der Nutzungsniveaus der Ressourcen und der Bedarfe der Ressourcen der Anwendungen erhalten wurden, um die Schwellenwerte (Smin, Sint, Smax) akzeptabler Leistung des Nutzungsniveaus für jede gemessene Ressource und für jede Anwendung festzulegen;
- einen Schritt des Kategorisierens und des Speicherns der Leistungsprobleme einer oder mehrerer Ressourcen aus dem Nutzungsbezugssystem (2) und den in dem Schritt des Messens und des Speicherns der Nutzungsniveaus der Ressourcen und der Bedarfe in Ressourcen der Anwendungen der Anwendungskette erhaltenen Daten;
- einen Schritt des Vergleichens der gemessenen Nutzungsniveaus mit den Schwellenwerten *(Smin, Sint, Smax)* akzeptabler Leistung aus den Leistungsproblemen des Kategorisierungsschritts;
- einen Schritt zum Einrichten eines Warnsignals für Leistungsprobleme aus den in dem Schritt des Vergleichens erhaltenen Daten, um das oder die Leistungsprobleme bei Ändern der Anwendungskette oder der Ressourcen einer Anwendung der Anwendungskette zu verbessern.

14. Verfahren nach Anspruch 13, **dadurch gekennzeichnet, dass** der Schritt des Vergleichens der gemessenen Nutzungsniveaus mit den Schwellenwerten *(Smin, Sint, Smax)* akzeptabler Leistung kontinuierlich wiederholt wird, um die Anwendungen der Anwendungskette kontinuierlich zu überwachen und zu warnen.

## Claims

1. A system for monitoring the performance of applications in an application chain comprising at least one computing machine and machine-executable software or code for implementing a mechanism for monitoring the performance of said applications in an application chain, said system comprising
- a hardware and software arrangement forming a measurement repository (1), said measurement repository (1) comprising a hardware and software arrangement (10) enabling, on the one hand, the measurement of utilization levels (Nurᵢ) of the resources (Ri) of the applications (Ai) on all the servers making up the application chain by computer probes, called consumption probes, installed on the application resources during periods (Pdpi) of performance degradation of one or more applications in the application chain, and secondly, to store these utilization levels in a memory (11) of the measurement repository (1), associating them by application and by period in the application chain;
- a hardware and software arrangement (20) establishing a utilization repository (2) configured to establish and store in at least one memory (21, 22, 23) acceptable performance thresholds *(Smin, Sint, Smax)* of the utilization level per resource and per application, based on data from the measurement repository (1), said thresholds comprising at least one maximum acceptable performance threshold *(Smax);*
the device being **characterized in that** it comprises:
- a categorization module (3) for categorizing performance problems as a function of the utilization levels available in the measurement repository (1) and the acceptable performance thresholds of the utilization levels of the resources available in the utilization repository (2), said categorization module making it possible to establish the categorization by comparing a calculation result of the future consumption of a resource with a maximum acceptable performance threshold of the utilization level of each application resource available in the utilization repository (2), in order to create an "application performance prevention" category, stored in a memory (35), when the result of the calculation of future resource consumption is above the maximum acceptable performance threshold of the application resource, said calculation of future performance degradation consumptions per resource and per application being determined from the association of a seasonality rule of the application resource requirements with the measured utilization level of the application resource available in the measurement repository (1), stored in a memory (34); and
- a hardware and software arrangement (40) configured to implement an alert mechanism (4), by creating and storing in at least one memory (41, 42, 43) at least one alert from measurement (1) and utilization (2) repository data categorized in the categorization module (3), when the monitoring mechanism detects a performance problem of one or more applications in the application chain or when the problem is resolved, the at least one alert being an "application performance preventive" alert when the result of calculating future consumption of an application resource available in the memory of the categorization module (3), is above a maximum threshold *(Smax)* of acceptable performance of said resource available in the utilization repository (2).

2. The system according to claim 1, **characterized in that** the thresholds *(Smin, Sint, Smax)* for acceptable performance of the utilization level comprise three acceptable thresholds forming a triplet and consisting of a minimum threshold *(Smin),* a maximum threshold *(Smax)* and an intermediate threshold *(Sint);* this triplet of thresholds *(Smin, Sint, Smax)* being stored for each resource and for each application in the application chain.

3. The system according to one of the preceding claims,
**characterized in that** the utilization repository (2) comprises at least one hardware and software arrangement (20) for establishing and storing in a memory (24), intervals (In) of acceptable consumption defined on the basis of measurements of the utilization level of the measurement repository (1).

4. The system according to one of the preceding claims,
**characterized in that** the monitoring mechanism is able to compare the level of resource utilization measured and stored in the measurement repository (1) with the consumption thresholds *(Smin, Sint, Smax)* and/or intervals (In) established in the utilization repository (2) per application.

5. The system according to the line of the preceding claims,
**characterized in that** the utilization repository (2) comprises at least one hardware and software arrangement (20) for establishing and storing in a memory the actual (21) and theoretical (22) utilization levels per threshold (Smin, Sint, Smax) for each resource.

6. The system according to one of the preceding claims,
**characterized in that** the application resource utilization levels are measured several times in order to characterize the different application resource consumption levels.

7. The system according to one of the preceding claims,
**characterized in that** the measurement of application resource utilization levels is carried out in a pre-production or qualification environment.

8. The system according to one of the preceding claims,
**characterized in that** the measurement of the utilization levels of the application resources is also carried out in a production environment, so as to refine, if necessary, the thresholds *(Smin, Smint, Smax)* of acceptable performance of the utilization level and/or the consumption intervals (In) for each resource and each application.

9. The system according to one of the preceding claims,
**characterized in that** the measurement repository (1) comprises a hardware and software arrangement enabling the measurement by consumption probes, and storage in a memory (23), of the "seasonal" utilization levels of resources or applications with strong seasonal variations in utilization, so as to establish and store "seasonal" thresholds *(Smin, Sint, Smax)* of acceptable performance of the utilization level for each resource and for each application.

10. The system according to one of the preceding claims,
**characterized in that** the categorization module (3) of the performance problems additionally makes it possible to establish the categorization by an operation of:
- creating a "resource consumption" category stored in a memory (31) and comprising the total consumption of a utilization level measured for each resource and each application in the application chain, or
- comparing a measured utilization level of a resource available in the measurement repository (1) with the maximum threshold *(Smax)* of acceptable performance of the utilization level of each resource of an application available in the utilization repository (2) in order to create a "hardware anomaly" category, stored in a memory (32), when the measured utilization level is above the maximum threshold *(Smax)* of the resource, or
- comparing a measured utilization level of a resource available in the measurement repository (1) with the interval (In) of acceptable consumption of the utilization level for each resource of an application available in a memory (24) of the utilization repository (2), in order to create an "application performance degradation" category, stored in a memory (33), when the measured utilization level is outside the interval (In) of acceptable consumption of the resource, or
- combining at least two of the above operations.

11. The system according to one of the preceding claims,
**characterized in that** the alert mechanism (4) also makes it possible to create and store in at least one memory (41, 42, 43) at least one or more of the following alerts:
- a "hardware anomaly" alert when the utilization level of an application resource available in the measurement repository (1), is above a maximum threshold *(Smax)* of acceptable performance of said resource available in the utilization repository (2);
- an "application performance degradation" alert when the utilization level of an application resource available in the measurement repository (1), is outside the interval (In) of acceptable consumption of said resource available in the utilization repository (2).

12. The system according to one of the preceding claims,
**characterized in that** the system is able to continuously monitor and report an anomaly on one or more applications of the application chain, or a degradation in the performance of the application chain due to an overconsumption of resources critical to the application, or a future overconsumption of resources.

13. A method for monitoring the performance of applications in an application chain and controlling a system according to any of claims 2 to 12, the method comprising:
- a step of measuring and storing the level of resource use for each application in the application chain, in order to characterize the different levels of resource consumption;
the method being **characterized in that** it further comprises:
- a step of measuring and storing the resource requirements of the various components of an application;
- a step of building a utilization repository (2) from the data obtained in the steps for measuring and storing resource utilization levels and application resource requirements, so as to establish acceptable utilization level performance thresholds (Smin, Sint, Smax) for each resource measured and for each application;
- a step of categorizing and storing performance problems for one or more resources, based on the utilization repository (2) and the data obtained in the steps for measuring and storing resource utilization levels and the resource requirements of the applications in the application chain;
- a step of comparing measured utilization levels with thresholds *(Smin, Sint, Smax)* for acceptable performance, based on performance problems from the categorization step;
- a step of reporting performance problems on the basis of the data obtained in the comparison step, so as to correct the performance problem(s) by modifying the application chain or the resources of an application in the application chain.

14. The method according to claim 13, **characterized in that** the step of comparing measured utilization levels with acceptable performance thresholds *(Smin, Sint, Smax)* is repeated continually so as to continuously monitor and report on the applications in the application chain.
